(19) Europäisches Patentamt
European Patent Office
Office européen des brevets

(11) Numéro de publication: **0 133 099 B1**

# (12) FASCICULE DE BREVET EUROPEEN

(45) Date de publication du fascicule du brevet: **08.11.89**

(51) Int. Cl.⁴: **B 01 J 8/10**, C 01 B 25/32, C 01 B 25/34, C 01 F 5/40

(21) Numéro de dépôt: **84401486.0**

(22) Date de dépôt: **13.07.84**

(54) **Procédé et appareillage pour la mise en oeuvre en continu et en phase sèche de réactions exothermiques et impliquant un dégagement gazeux.**

(30) Priorité: **29.07.83 FR 8312586**

(43) Date de publication de la demande: **13.02.85 Bulletin 85/7**

(45) Mention de la délivrance du brevet: **08.11.89 Bulletin 89/45**

(84) Etats contractants désignés: **AT BE CH DE FR GB IT LI LU NL SE**

(56) Documents cités:
**FR-A-2 186 956**
**FR-A-2 340 905**
**US-A-3 409 394**
**US-A-3 467 495**

(73) Titulaire: **TIMAC S.A., Quai Intérieur B.P. no. 158, F-35408 St Malo Cedex (FR)**

(72) Inventeur: **Fayard, Christian Marie, 2, Rue Macé Jallobert, F-35400 Saint Malo (FR)**
Inventeur: **De Villele, Hubert Marie, 19, Allée des Grandes Fermes, F-92420 Vaucresson (FR)**
Inventeur: **Gillet, Paul, 5, Square de l'Ile Crozet, F-35400 Saint Malo (FR)**
Inventeur: **Siberchicot, Jean-Claude, 20, Avenue du Grand-Jean, F-40220 Tarnos (FR)**

(74) Mandataire: **Richebourg, Michel François et al, Cabinet Beau de Loménie 55, rue d'Amsterdam, F-75008 Paris (FR)**



Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé et un appareillage de mise en œuvre de réactions chimiques exothermiques de manière continue entre des produits solides, liquides ou gazeux de manière à obtenir un produit final solide sec (teneur en eau libre généralement inférieure à 6% pour des produits minéraux) selon les caractéristiques principales suivantes:

1) Le milieu réactionnel reste en permanence en phase solide d'apparence sèche (solide en suspension dans un milieu gazeux) d'où limitation de tout risque d'encrassement.

2) A chaque instant, les différents produits contenus dans la phase en réaction restent dans des proportions voisines des conditions stœchiométriques de la réaction désirée, d'où limitation de réactions parasites ou intermédiaires gênantes.

3) La réaction mise en œuvre conduit généralement à la formation, outre le produit solide désiré, de composés gazeux (vapeur d'eau, $CO_2$, etc.) qui contribuent dans les conditions de réaction et dans une large mesure à la mise en suspension et à la fluidisation de la masse réactionnelle.

4) L'énergie mécanique additionnelle pour effectuer cette mise en suspension est très faible du fait de la grande fluidité de la masse en réaction.

5) La température de réaction est constante et peut être amenée au niveau optimal désiré, permettant d'obtenir des conditions de réaction stables et des vitesses de réaction élevées, et ceci:

– par le contrôle des débits de matières premières entrant en réaction (toute variation de température dans les réacteurs indique d'ailleurs immédiatement toute variation des débits et caractéristiques des matières premières).

– par le choix initial du niveau exothermique des réactions choisies (on peut mettre en œuvre simultanément dans le réacteur des réactions d'exothermicité différentes: par exemple: réaction de l'acide phosphorique avec la chaux vive, simultanément avec la réaction de celui-ci avec le carbonate de calcium).

6) L'appareillage favorise de plus le départ des composés gazeux obtenus décuplant de ce fait les équilibres chimiques dans le sens souhaité.

Les conditions d'évacuation des gaz fournis, liées à la stabilisation des paramètres de marche du réacteur font que celles-ci sont facilement ajustées pour:

– limiter les envolements de matières solides

– permettre leur traitement à sec (cyclone, filtre à manche) évitant toute perte de produit, toute corrosion importante, toute pollution (simplifiant de ce fait les installations de traitement).

7) Compte tenu des paramètres précédents, le réacteur est de petite dimension (quantités faibles de produits mises en œuvre), rendant ainsi les pertes thermiques faibles et donnant un rendement thermodynamique excellent. Le coût des matières premières est de ce fait optimisé.

Par exemple: (dans le cas où l'on fait réagir l'acide sur un mélange de CaO et $CaCO_3$, la proportion de CaO matière première coûteuse est sensiblement diminuée, tandis que celle de $CaCO_3$ est augmentée).

8) Les poudres obtenues ont l'avantage d'être facilement granulables ultérieurement.

La présente invention a donc pour objet un appareillage pour la mise en œuvre en continu en phase sèche de réactions exothermiques et impliquant un dégagement gazeux, caractérisé en ce qu'il comprend:

– un mélangeur à haute efficacité;

– une chambre de détente disposée au-dessus du mélangeur et communiquant avec celui-ci;

– des moyens pour introduire en continu un ou plusieurs des produits de départ dans le mélangeur;

– au moins une goulotte d'introduction en continu des produits liquides de départ disposée au-dessus du mélangeur.

– un système de récupération en continu ou discontinu du produit fini à la base dudit mélangeur;

– un système d'échappement des gaz de réaction à la partie supérieure de la chambre de détente.

D'autres caractéristiques et avantages de l'invention seront mieux compris à la lecture de la description qui va suivre et en se référant au dessin annexé sur lequel:

– la figure 1 représente un mode de réalisation préféré de l'appareillage selon l'invention.

Les références ont les significations suivantes:

1) Mélangeur à haute efficacité (notamment cylindrique à socs).

2) Chambre de détente

3) Introduction de matières premières

4) Goulotte d'introduction et de répartition des produits liquides de départ. Dans le cas de l'introduction d'acide phosphorique ou de manière plus générale d'un liquide réactif, cette goulotte forme une sorte de canal horizontal dont un des bords est découpé en dents de scie, ce qui permet un débordement régulier du liquide au-dessus de toute la longueur du mélangeur 1.

On pourra prévoir à ce niveau, si nécessaire, d'autres moyens d'introduction d'autres réactifs éventuels (par exemple NaOH).

4 bis) Rampe d'introduction de matières premières gazeuses ou liquides ($NH_3$ par exemple).

5) Chambre annulaire pour l'introduction d'un gaz de dilution lorsque cela est nécessaire, notamment d'air.

6) Récupérateur de particules, par exemple filtre à manches pour poussières.

7) Ventilateur d'extraction.

8) Zone où se produit en continu la réaction entre le premier réactif ou mélange réactif en poudre 3, projeté vers le haut par le mélangeur 1 et le second réactif introduit par le dispositif 4 ou le réactif gazeux ou liquide introduit par le dispositif 4bis.

9) Introduction du gaz de dilution, de préférence réchauffé dans un échangeur de chaleur 11 placé sur le trajet des gaz de réaction en aval du filtre pour poussières 6.

10) Extraction du produit fini.

11) Récupérateur de chaleur, laquelle est transmise au gaz destiné à la dilution.

12) Recyclage des poussières.

Le fonctionnement de l'appareillage, ainsi que ses principaux avantages seront discutés dans le cadre de la réaction de l'acide phosphorique sur la chaux (CaO) et/ou le carbonate de calcium ($CO_3Ca$).

– La figure 2 représente le diagramme triangulaire MgO, Dolomie, $H_3PO_4$. La zone «A» est celle des réactions pouvant être mises en œuvre dans l'appareillage selon l'invention; dans la zone «B», les réactions ne sont pas envisageables.

DESCRIPTION DES RÉACTIONS POSSIBLES

La préparation d'un très grand nombre de produits peut être envisagée. A la lecture de la présente description et des exemples de mise en œuvre, l'homme de métier pourra sans difficulté appliquer l'invention à d'autres réactions que celles décrites ici à titre d'exemples. Des produits particuliers ont pu être obtenus selon l'invention en combinant les matières premières suivantes:

A
- Acide phosphorique technique
- Acide phosphorique technique désulfaté, défluoré
- Acide sulfurique

B
- $NH_3$ liquéfié au gaz
- CaO chaux vive
- MgO magnésie caustique
- NaOH en solution

C
- Carbonate de calcium
- Carbonate de magnésium
- Dolomie
- Carbonate de soude
- Bicarbonate de soude
- Phosphate de chaux naturel

Combinaisons possibles entre AB, AC et ABC de manière à obtenir:

1) Des produits destinés à l'alimentation animale
- Phosphate mono-bicalcique
- Phosphates bicalciques
- Phosphates magnésiens
- Phosphates calcomagnésiens
- Phosphates calcosodo-magnésiens

2) Des produits destinés à la fertilisation
- Phosphates magnésiens
- Phosphates calcomagnésiens
- Phosphates ammoniacaux
- Sulfo-phosphates calcomagnésiens
- Sulfo-phosphates ammoniacaux.

Il est évident qu'il existe en fait une foule de produits possibles à réaliser dans l'appareillage selon l'invention, aussi nous ne retiendrons que les principales utilisations étudiées jusqu'à ce jour:

1) La réaction de la chaux (CaO) et du carbonate de calcium ($CaCO_3$) sur l'acide phosphorique qui produit de manière connue les phosphates mono- et bicalciques.

Les phosphates bicalciques fabriqués de cette manière sont essentiellement destinés à l'alimentation animale, aussi les qualités des matières premières sont convenablement choisies pour répondre aux normes des produits finis.

Dans l'un des procédés connus (BASLINI), on fait notamment appel à des mélangeurs de grande capacité (25 $m^3$ par exemple) dans lesquels la réaction s'effectue par étapes successives, et lentement (de l'ordre de 6 h); de ce fait les rendements horaires volumiques sont faibles, ainsi que les rendements thermiques.

2) Les réactions de la magnésie calcinée caustique (MgO) et le carbonate de magnésium ($MgCO_3$) et/ou la Dolomie ($CaCO_3$ (1 − x) Mg (x)) sur l'acide phosphorique de manière à obtenir un produit magnésien entièrement original, constituant une nouvelle forme de dérivé magnésien en poudre, dont on pense qu'elle a la formule

$$(P_2O_5)x\ (MgO)y\ (CaO)z,\ nH_2O$$

où x, y, z, n, représentent le nombre de molécules, dans des proportions non encore définies.

Les produits fabriqués de cette manière peuvent être utilisés dans deux domaines:

A - LA FERTILISATION

Dans ce domaine, l'homme de métier sait que l'on utilise principalement, actuellement, deux formes de mise en œuvre du Mg dans le domaine des engrais:

a) le magnésium non soluble ou très peu soluble dans l'eau
- Dolomie
- $MgCO_3$
- $Mg(OH)_2$
- MgO caustique
- Dounite
- Serpentinite, etc.

b) le magnésium soluble dans l'eau
- Sulfate de Mg
- Chlorure de Mg.

Formes dont l'efficacité agronomique peut être limitée (cas des produits «a») sur certains types de sols (sols neutres ou basiques).

ou qui amènent des problèmes d'utilisation en fabrication:

– difficulté de granulation, pertes de matières premières, limitation des doses d'emploi pour les produits de la gamme «a».

– réactions parasites entre le magnésium et les autres composants de l'engrais pour la forme «b» (blocage des éléments N, $P_2O_5$, MgO dans la fabrication des engrais complexes NPK par formation de phosphate ammoniacal magnésien, sel particulièrement insoluble).

Dans ces conditions, l'homme de métier sait que des engrais comportant plus de 5% de MgO sont difficiles à obtenir.

De manière surprenante, l'appareillage selon l'invention, et le procédé correspondant, permettent d'obtenir une nouvelle forme de produit amenant le Mg qui peut être classé en:

«magnésie soluble dans le citrate d'ammonium neutre» (cette solution constituant un test normalisé de classification des engrais phosphatés, avec la solubilité dans l'eau);

le $P_2O_5$ lié au magnésium dans ce même produit étant, lui aussi, soluble dans le citrate neutre.

Sous cette forme, le magnésium, bien que faiblement soluble dans l'eau, peut être considéré comme assimilable au point de vue agronomique, limitant de ce fait considérablement les contraintes d'emploi (contraintes du pH du sol).

Il peut être aussi utilisé:

– tel quel car il est facilement granulable,

– soit comme matières premières dans la fabrication d'engrais granulés et ceci à fortes doses, sans problème de réactions ultérieures ou de granulation.

Il devient ainsi possible pour la première fois de fabriquer des engrais P, NP, PK et NPK à forte teneur en MgO (jusqu'à environ 30% de MgO).

Il est d'ailleurs possible d'ajouter dans le réacteur, sans inconvénient majeur, des produits d'addition telle que la colémanite, permettant d'obtenir des produits amenant de plus l'élément BORE et ceci sans problème de granulation ultérieure.

L'invention ouvre donc une voie nouvelle dans le domaine des engrais.

B - L'ALIMENTATION ANIMALE

Dans ce domaine, l'homme de métier sait qu'un des moyens utilisé principalement actuellement pour apporter les éléments P, Ca, Mg dans l'alimentation animale, est d'amener séparément: P et Ca sous forme de phosphate tricalcique (généralement défluoré) et/ou phosphates mono-bicalciques, et la magnésie sous forme MgO calcinée.

Certains produits de cette famille ont l'avantage d'amener sous une forme économique ces mêmes éléments en une seule fois dans une combinaison concentrée, qui ne pose pas les problèmes rencontrés avec l'emploi de MgO (échauffement, dégranulation, transfert d'humidité dans les sacs) où le magnésium semble être mieux utilisé par l'animal (meilleur rendement d'utilisation par l'animal).

L'invention ouvre donc là aussi une voie nouvelle dans le domaine de l'alimentation animale.

3) La réaction de la magnésie (MgO) et/ou de la Dolomie et du phosphate naturel broyé avec l'acide sulfurique et/ou l'acide phosphorique.

Dans ces conditions, nous obtenons des produits dans lesquels:

– le $P_2O_5$ se présente sous trois formes:
  – Soluble dans l'eau
  – Soluble dans le citrate
  – Soluble dans les acides minéraux

– la magnésie se présente sous trois formes:
  – Soluble dans l'eau
  – Soluble dans le citrate
  – Insoluble dans l'eau.

Les produits ont de ce fait trois niveaux d'activité.

Les produits sont facilement granulables tels quels ou en mélange avec par exemple du chlorure de potassium (fabrication des engrais PK).

Exemple de produit obtenu (%)

| | | | | | |
|---|---|---|---|---|---|
| $P_2O_5$ | Total | 18 | MgO | Total | 8 |
| | Soluble citrate | 10 | | Soluble citrate | 6 |
| | Soluble eau | 7 | | Soluble eau | 2 |

4) La réaction de la magnésie (MgO), de la Dolomie, de la lessive de soude (NaOH) avec l'acide phosphorique.

Les produits originaux obtenus selon l'invention répondent probablement à la forme suivante:

$$(P_2O_5)v\ (MgO)x\ (CaO)y\ (Na_2O)z,\ nH_2O$$

ou d'une manière plus générale $P_2O_5\ (MO)m,\ nH_2O$ où v, x, y, z, m, n représentent le nombre de molécules, et où M peut être $Ca^{++}$, $Mg^{++}$ ou $2Na^{++}$ ou un mélange de 2 ou 3 de ces ions avec cependant comme limites:

$6\% < P_2O_5 < 60\%$

Nous avons pu obtenir ainsi les produits suivants:

| | Produit 1 | Produit 2 |
|---|---|---|
| $P_2O_5$ | 41,6 | 41,2 |
| CaO | 33,5 | 15,8 |
| $Na_2O$ | 5,4 | 4,5 |
| MgO | 1 | 7,2 |

Ces produits trouvent leur application dans:

– le domaine des engrais spéciaux au sodium

– le domaine de l'alimentation animale.

MODE GÉNÉRAL DE MISE EN ŒUVRE, ILLUSTRÉ PAR LA FABRICATION DES PHOSPHATES BICALCIQUES

La ou les matières premières solides, à l'état de poudre broyée, par exemple chaux et/ou carbonate de calcium, sont introduites en continu, après dosage précis par tout système le permettant, dans un mélangeur 1 cylindrique dit de haute efficacité, à socs de charrue, équipé de disperseurs en quantité suffisante, que l'on trouve sur le marché.

Dans la chambre 2, une goulotte de répartition 4 est installée pour distribuer uniformément sur toute la longueur du mélangeur l'acide phosphorique dont le débit est connu de façon précise par tout appareil classique. La goulotte de répartition est étudiée pour ne pas s'encrasser par les projections de poudres; un système de fixation particulier a été conçu pour la positionner afin que l'acide tombe au mieux sur la masse réactionnelle. De préférence cette goulotte doit se situer dans le mètre le plus bas de la chambre 2.

L'originalité de la chambre est que les produits projetés suffisamment haut dans celle-ci du fait de la violente agitation, fournie par le mélangeur, s'atomisent au contact de l'acide phosphorique et se dégazent parfaitement bien. Sa dimension calculée évite par ailleurs selon les lois de STOCKES un maximum d'envolements.

Les gaz réactionnels, vapeur d'eau et gaz carbonique, portés par l'exothermicité de la réaction à des températures élevées, comprises entre 80 et 160 °C, sont aspirés selon un système calculé de VENTURI, ceci en haut de la chambre de détente, après avoir été dilués par de l'air préchauffé à partir d'un échangeur récupérant la thermicité et particulièrement la chaleur de condensation de la vapeur d'eau à l'exhaure, ou toute autre source de chaleur, telle que la vapeur fatale que l'on peut trouver sur les sites industriels. Les volumes, débits et températures des courants gazeux sont agencés de façon à travailler en phase sèche. Dans le système mis en œuvre l'air chaud de dilution est conduit, uniformément réparti, sur le périmètre 5 de la chambre de détente et de bas en haut afin d'avoir une bonne isolation et d'éviter toute condensation sur les parois, d'où un système parfaitement propre. Toute autre manière de maintien en température tel que traçage électrique ou vapeur peut être retenue.

Le mélange gazeux est conduit vers un appareil 6 de récupération des particules, par exemple un filtre à manches, avant d'être éjecté à l'air libre (ou sur l'échangeur précédemment cité). Le mouvement gazeux est entraîné et contrôlé par un ventilateur 7 situé après le filtre.

Les poussières sèches très fines recueillies par l'appareil de séparation sont réintroduites avec les matières premières solides, ou reversées directement dans le produit fini.

Il n'existe pas, en conséquence, de lavage humide des gaz, donc pas de problèmes de pollution.

Il est bien évident que le système doit être parfaitement calorifugé par tous moyens connus.

Un avantage capital de l'invention est de travailler intégralement en phase sèche. Cela est possible, notamment, en ce qui concerne la récupération des poussières, grâce à l'introduction du gaz chaud de dilution. On évite ainsi, entre autres avantages, les contraintes très lourdes d'un lavage humide des gaz (pollution et très grand encombrement).

En fonctionnement, il s'est avéré que le filtre restait propre et avait d'autre part peu de poussières à arrêter.

Un ature avantage essentiel de l'invention est de permettre un déroulement en continu de la réaction ce qui permet de la contrôler précisément à tout instant par la mesure, par exemple, du paramètre température des gaz dans la chambre 2.

Le mélange réactionnel ne passe jamais par un état pâteux et les quantités de gaz émis sont des constantes en fonction du temps.

En aucun moment de la réaction le produit contenu dans le mélangeur n'est, du fait des rapports entre les matières premières, à l'état de phase humide. L'agitation dans le mélangeur étant fort efficace, il est à considérer que le produit est totalement homogène et qu'il est donc possible d'évacuer en continu le phosphate calcique formé afin de maintenir un taux de remplissage du mélangeur compris entre 35 et 50% en volume.

Le procédé décrit présente l'avantage d'un excellent rapport de volume de cuverie pour un débit de produit fini important, ceci étant dû à l'invention même, à savoir que le mélange, la réaction elle-même et le dégazage se font immédiatement dans le bas de la chambre de détente, sous forme d'atomisation, le dégazage n'ayant pas à se faire à travers la masse contenue dans le réacteur. Les produits finis, par le fait même, sont d'une grande finesse.

Pour un réacteur de 666 l (1 t/h), on atteint selon l'invention 1,8 t/$m^3 \cdot h$, alors que dans les systèmes connus fonctionnant en discontinu dans des cuves de 25 $m^3$, à 2 t/h, on n'atteint que 0,088 t/$m^3 \cdot h$.

Le présent procédé est encore remarquable par la faible consommation énergétique (la faible consistance du milieu réactionnel autorise une violente agitation faiblement consommatrice d'énergie et, d'autre part, l'exothermicité de la réaction, et les sources d'énergie fatale du site, participent au bilan énergétique et peuvent assurer l'autosuffisance de l'appareillage) et par la très petite dimension de l'unité de production par rapport aux ateliers connus à ce jour pour la fabrication de ces produits. Le rendement est tout à fait bon étant donné que les pertes de produits finis sont strictement limitées aux ultra-fines particules pouvant franchir les médias de filtration des gaz.

Cette installation est facilement automatisable, rendant sa surveillance très simplifiée.

L'acide phosphorique utilisé a un titre compris entre 40 et 54% de $P_2O_5$. Cet acide doit être de qualité convenable non pour le déroulement du procédé mais pour la conformité aux normes d'utilisation du produit fini.

Les matières premières utilisées dans un rapport défini selon le titre de l'acide, la réactivité des matières premières et le phosphate calcique désiré, doivent être de bonne qualité à savoir de titre élevé et de finesse convenable.

Les exemples suivants illustrent l'invention sans toutefois en limiter la portée.

Exemple 1

Phosphate bicalcique.

Par heure de fonctionnement, répartis continuellement sur ce laps de temps, 280 kg de chaux vive à 95,2% de CaO, 125 kg de carbonate de calcium à 97,4% de $CaCO_3$ (soit un rapport $CaO/CaCO_3 = 2,24$) sont introduits sous forme d'un mélange de poudres dans le réacteur (8) et 882 kg d'acide phosphorique purifié, à 47,2% $P_2O_5$ et 40 °C sont déversés (4) sur le mélange réactionnel projeté, tout l'appareillage fonctionnant selon le procédé continu. Une tonne de produit fini, phosphate bicalcique, est extraite en continu sur ce même temps. La température du mélange est de 92 °C.

On a utilisé un réacteur de 666 l, muni d'une chambre de détente d'une hauteur de 4 m, le système gazeux étant mis en mouvement par un ventilateur de 3000 $Nm^3/h$.

Le phosphate bicalcique obtenu titre 41,6% $P_2O_5$ total dont 40,1% $P_2O_5$ soluble eau + citrate neutre, 41,4% dans l'acide citrique 2% (GUEGUEN) 39,2% CaO. Le produit a une humidité de 2% (4 h à 105 °C) et un pH (10%) de 6.

Produit blanc, de finesse toute inférieure à 50 µm, parfaitement fluide.

Des modifications limitées dans les conditions d'exploitation du réacteur permettent l'obtention d'un produit microgranulé à d mini 100 µm à d maxi 1500 µm.

Exemple 2

Produits magnésiens

Il a été découvert que le diagramme triangulaire (figure 2) permettait de délimiter une zone (A) où les réactions pouvaient être mises en œuvre par le procédé et dans l'appareillage selon l'invention, et une zone (B) où cela était impossible.

Ce diagramme permettra à l'homme de métier de sélectionner sans difficulté les proportions à utiliser pour les divers réactifs.

On trouvera dans le tableau ci-après, les résultats de la mise en œuvre de réaction en continu dans l'appareillage selon l'invention tel que décrit dans l'exemple 1.

La vitesse de réaction peut être considérée comme constante par rapport à la masse entrant et voisine de 15 kg/min × $m^3$.

Tableau

Essai d'attaque et de granulation de dérivés magnésiens

| % de la masse introduite | | | Résultats d'analyse des produits granulés ramenés A 5% d'humidité | | | | | | | |
|---|---|---|---|---|---|---|---|---|---|---|
| Dolomie | Magnésie | $H_3PO_4$ | $P_2O_5$ tot | $P_2O_5$ SE | $P_2O_5$ SCN | CaO tot | MgO tot | MgO SE | MgO SCN | pH |
| 84,03 | 0 | 15,97 | 6,92 | 3,57 | 6,84 | 26,95 | 19,03 | 5,39 | 5,54 | 7,3 |
| 54,03 | 16,14 | 29,82 | 12,28 | 4,68 | 12,05 | 19,77 | 26,95 | 2,97 | 15,48 | 7,9 |
| 20,77 | 34,62 | 44,60 | 19,25 | 4,22 | 19,15 | 7,67 | 32,30 | 2,95 | 20,77 | 7,9 |
| 0 | 46,00 | 54,00 | 24,96 | 4,73 | 24,55 | 4,41 | 39,33 | 4,84 | 32,56 | 7,8 |
| 63,20 | 9,00 | 27,80 | 11,66 | 6,04 | 11,58 | 23,16 | 23,59 | 4,49 | 12,61 | 7,8 |
| 42,31 | 21,79 | 35,90 | 15,69 | 6,12 | 15,58 | 16,78 | 27,51 | 4,85 | 17,21 | 7,9 |
| 10,00 | 41,00 | 49,00 | 22,74 | 5,27 | 22,66 | 4,42 | 34,27 | 4,26 | 27,77 | 8,0 |
| 30 | 30 | 40 | 17,97 | 5,35 | 17,82 | 14,35 | 33,58 | 4,23 | 23,44 | 8,0 |

Notes: tot = total
SE = soluble dans l'eau
SCN = soluble dans le citrate neutre

**Revendications**

1. Appareillage pour la mise en œuvre en continu en phase sèche de réactions exothermiques et impliquant un dégagement gazeux, caractérisé en ce qu'il comprend:

– un mélangeur à haute efficacité (1);

– une chambre de détente (2) disposée audessus du mélangeur et communiquant avec celui-ci;

– des moyens (3) pour introduire en continu un ou plusieurs des produits de départ dans le mélangeur (1);

– au moins une goulotte (4) d'introduction en continu des produits liquides de départ disposée au-dessus du mélangeur (1);

– un système de récupération (10) en continu ou discontinu du produit fini à la base dudit mélangeur (1);

– un système d'échappement des gaz de réaction à la partie supérieure de la chambre de détente (2).

2. Appareillage selon la revendication 1, caractérisé en ce qu'il comprend en outre une chambre (5) entourant ladite chambre de détente (2) et débouchant à sa partie supérieure dans celle-ci, par laquelle on introduit un gaz de dilution (9) dans ladite chambre de détente (2).

3. Appareillage selon l'une des revendications précédentes, caractérisé en ce que la goulotte (4) d'introduction en continu des autres produits de départ débouche sensiblement au niveau du quart inférieur (8) de la chambre de détente (2).

4. Appareillage selon l'une des revendications précédentes caractérisé en ce qu'il comprend en outre, à la partie inférieure du mélangeur (1), une rampe (4bis) d'introduction de réactifs gazeux.

5. Appareillage selon l'une des revendications précédentes, caractérisé en ce que ledit système d'échappement des gaz de réaction comporte un filtre pour poussières (6) et un ventilateur (7).

6. Appareillage selon l'une des revendications précédentes, caractérisé en ce que le mélangeur (1) est cylindrique, à socs, et la chambre (5) est annulaire.

7. Appareillage selon l'une des revendications précédentes, caractérisé en ce que le gaz de dilution (9) consiste en air préchauffé dans un échangeur de chaleur (11) placé sur le trajet des gaz de réaction en aval dudit filtre pour poussières (6).

8. Appareillage selon l'une des revendications précédentes, caractérisé en ce que les poussières récupérées au niveau dudit filtre (6) sont recyclées avec les matières premières ou jointes au produit fini.

9. Appareillage selon l'une quelconque des revendications précédentes, caractérisé en ce que ladite goulotte (4) consiste en un canal horizontal à débordement de liquide.

10. Appareillage selon l'une des revendications précédentes, caractérisé en ce qu'il est utilisé pour la mise en œuvre en continu de réactions exothermiques à partir de réactifs solides choisis parmi le MgO calciné et/ou $MgCO_3$ et/ou Dolomie et d'autres réactifs choisis parmi $H_3PO_4$ et/ou $H_2SO_4$, pour obtenir un produit magnésien en poudre.

## Claims

1. Apparatus for carrying out, continuously and in dry phase, exothermic reactions and involving liberation of gas, characterized in that it comprises:

– a high-efficiency mixer (1);

– an expansion chamber (2) disposed above the mixer and communicating therewith;

– means (3) for continuously introducing one or more of the starting products into the mixer (1);

– at least one spout (4) continuously introducing starting products in liquid form, situated above the mixer (1);

– a system (10) for continuously or discontinuously recovering the finished product at the base of said mixer (1);

– a system for exhaust of the reaction gases, in the upper part of the expansion chamber (2).

2. Apparatus according to claim 1, characterized in that it further comprises a chamber (15) surrounding said expansion chamber (2) and opening out therein in its upper part, via which a dilution gas (9) is introduced into said expansion chamber (2).

3. Apparatus according to any one of the preceding claims, characterized in that the spout (4) for continuously introducing the other starting products, issues substantially at the level of the quarter (8) of the expansion chamber (2).

4. Apparatus according to any one of the preceding claims, characterized in that it further comprises, at the lower part of the mixer (1), a ramp (4bis) for introducing the gaseous reagents.

5. Apparatus according to any one of the preceding claims, characterized in that said system for the exhaust of reaction gases comprise a dust filter (6) and a fan (7).

6. Apparatus according to any one of the preceding claims, characterized in that the mixer (1) is cylindrical, with plough shares, and the chamber (5) is annular.

7. Apparatus according to any one of the preceding claims, characterized in that the dilution gas (9) consists in air preheated in a heat exchanger (11) placed on the path of the reaction gases downstream of the dust filter (6).

8. Apparatus according to any one of the preceding claims, characterized in that the dust recovered at the level of said filter (6) is recycled with the raw materials or added to the finished product.

9. Apparatus according to any one of the preceding claims, characterized in that said spout (4) consists in a horizontal channel with liquid overflow means.

10. Apparatus according to any one of the preceding claims, characterized in that it is used for continuously making exothermic reactions with solid reagents selected from calcined MgO and/or $MgCO_3$ and for Dolomite and other reagents selected from $H_3PO_4$ and/or $H_2SO_4$, in order to obtain a magnesium product in powder form.

## Patentansprüche

1. Vorrichtung zur kontinuierlichen Durchführung von exothermen Reaktionen unter Gasentwicklung in trockener Phase, dadurch gekennzeichnet, daß sie umfaßt:

– einen Hochleistungsmischer (1);

– eine Entspannungskammer (2), die oberhalb des Mischers und mit diesem kommunizierend angeordnet ist;

– Mittel (3) zum kontinuierlichen Einbringen eines oder mehrerer Ausgangsprodukte(s) in den Mischer (1);

– mindestens eine oberhalb des Mischers (1) angeordnete Rinne (4) zum kontinuierlichen Einbringen flüssiger Ausgangsprodukte;

– ein System (10) zur kontinuierlichen oder diskontinuierlichen Gewinnung des Endprodukts an der Basis des Mischers (1);

– ein System zum Entweichen der Reaktionsgase im oberen Teil der Entspannungskammer (2).

2. Vorrichtung nach Anspruch 1, dadurch gekennzeichnet, daß sie weiters eine Kammer (5) umfaßt, die die Entspannungskammer (2) umgibt und in ihrem oberen Teil in diese einmündet, über welche man ein Verdünnungsgas (9) in die Entspannungskammer (2) einleitet.

3. Vorrichtung nach einem der vorhergehenden Ansprüche, dadurch gekennzeichnet, daß die Rinne (4) zum kontinuierlichen Einbringen der anderen Ausgangsprodukte im wesentlichen im Bereich des unteren Viertels (8) der Entspannungskammer (2) einmündet.

4. Vorrichtung nach einem der vorhergehenden Ansprüche, dadurch gekennzeichnet, daß sie weiters im unteren Teil des Mischers (1) einen Zulauf (4a) zum Einleiten gasförmiger Reagenzien umfaßt.

5. Vorrichtung nach einem der vorhergehenden Ansprüche, dadurch gekennzeichnet, daß das System zum Entweichen der Reaktionsgase einen Staubfilter (6) und einen Ventilator (7) umfaßt.

6. Vorrichtung nach einem der vorhergehenden Ansprüche, dadurch gekennzeichnet, daß der Mischer (1) zylinderförmig mit Scharen ausgebildet und die Kammer (5) ringförmig ist.

7. Vorrichtung nach einem der vorhergehenden Ansprüche, dadurch gekennzeichnet, daß das

Verdünnungsgas (9) aus in einem in der Bahn der Reaktionsgase unterhalb des Staubfilters (6) angeordneten Wärmeaustauscher (11) vorerhitzter Luft besteht.

8. Vorrichtung nach einem der vorhergehenden Ansprüche, dadurch gekennzeichnet, daß der im Bereich des Filters (6) gewonnene Staub mit den Ausgangsmaterialien oder gemeinsam mit dem Endprodukt rückgeführt wird.

9. Vorrichtung nach einem der vorhergehenden Ansprüche, dadurch gekennzeichnet, daß die Rinne (4) aus einem horizontalen Kanal mit Flüssigkeitsüberlauf besteht.

10. Vorrichtung nach einem der vorhergehenden Ansprüche, dadurch gekennzeichnet, daß sie zur kontinuierlichen Durchführung von exothermen Reaktionen, ausgehend von festen Reagenzien, ausgewählt aus geröstetem MgO und/oder $MgCO_3$ und/oder Dolomit, und anderen Reagenzien, ausgewählt aus $H_3PO_4$ und/oder $H_2SO_4$, zur Bildung eines pulverförmigen Magnesiumprodukts dient.

Fig_1

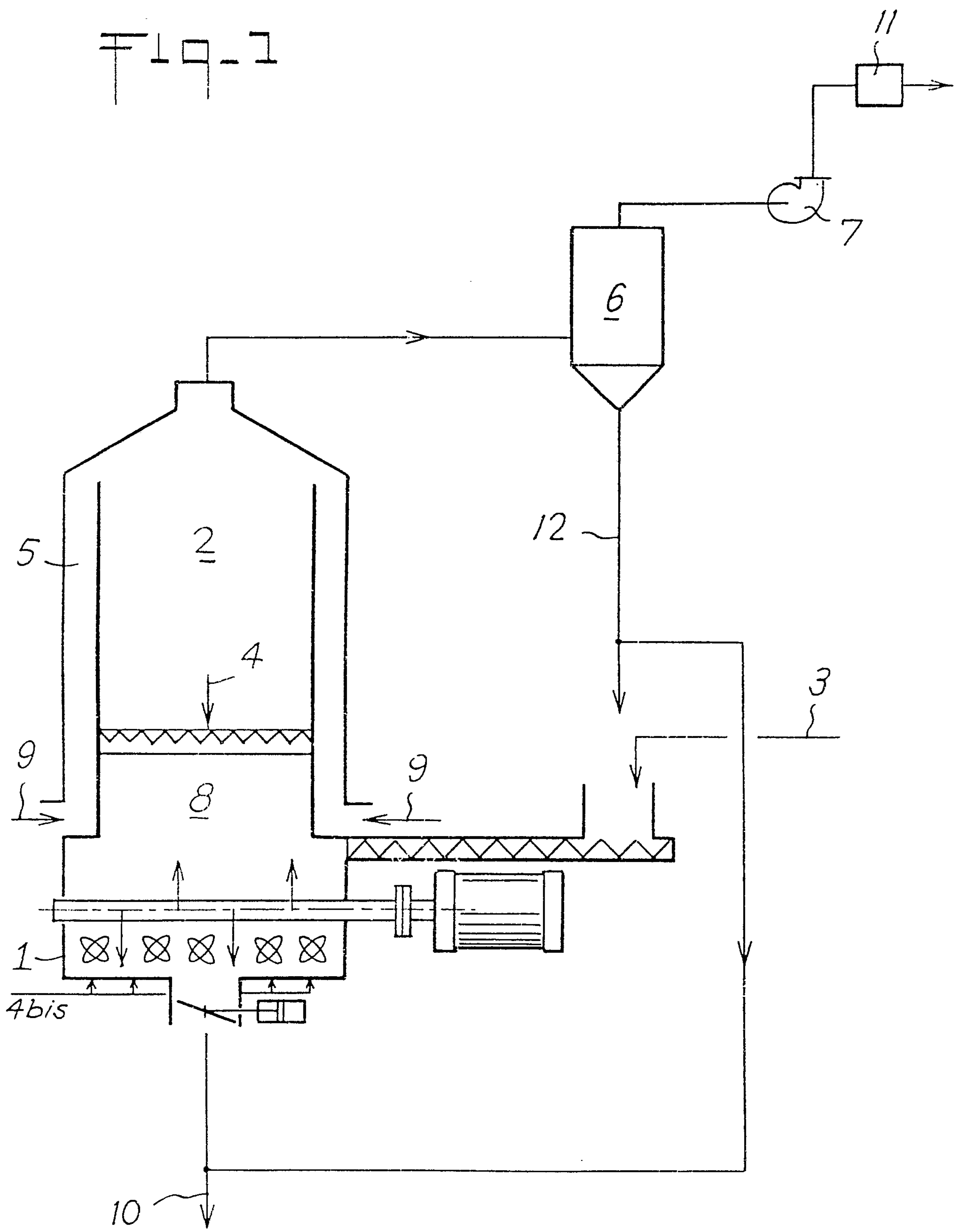

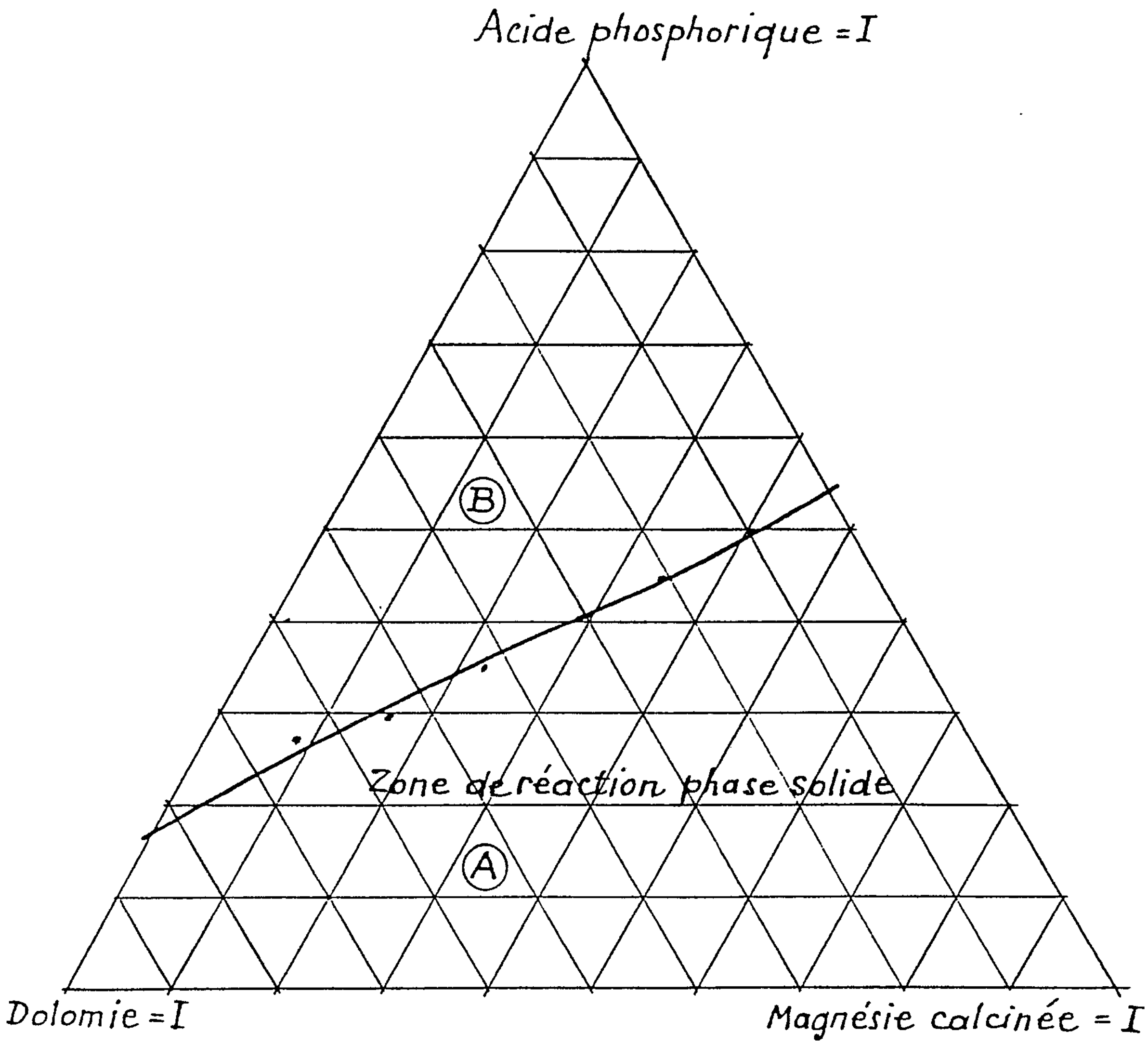
Acide phosphorique = I
B
Zone de réaction phase solide
A
Dolomie = I
Magnésie calcinée = I

Fig-2